# EUROPEAN PATENT APPLICATION

(11) **EP 4 026 816 A1**
(43) Date of publication of application: **13.07.2022**
(21) Application number: 19944063.7
(22) Date of filing: 04.09.2019
(51) Int. Cl.: C04B 28/00, C04B 111/20, E04F 13/00, E04C 2/04

(54) **ARTIFICIAL GRANITE PRODUCT FOR SIMULATING NOBLE STONE IN A SURFACE COATING, PROCESS FOR OBTAINING SAME, METHOD OF APPLICATION AND USE**

(71) Applicant: Las Casas, Renato Duarte, 30.380-370 Belo Horizonte (BR)
(72) Inventor: Las Casas, Renato Duarte, 30.380-370 Belo Horizonte (BR)
(74) Representative: Plasseraud IP
(86) International application number: PCT/BR2019/050374
(87) International publication number: WO 2021/042189

(57) **Abstract**

The present invention comprises an artificial granite-type product that simulates a high-end stone when used for lining surfaces, the process for obtaining said product, the application method, and use. The used formulation comprises water, stabilizers, shorteners, resins, binders, alkalinizers, microbicides, fungicides, dolomites mineral loads, flakes, UV protector, and antioxidant. The process for obtaining an artificial granite-type product is based on a specific order for adding components and additives for the formulation, including the observation of specific transition points throughout the process steps. Furthermore, the method for applying the product features certain advantages that make its use superior, versatile and easy in relation to similar products available in the market.

## Description

### INVENTION FIELD

The present invention refers to the materials-related field of science and particularly to new sustainable artificial materials as a replacement for the predominantly ornamental use of high end natural stones. In this context, the present invention patent further applies to the civil construction industry as it relates to a product that simulates natural granite, how it's obtained, its respective application method, and its use as a decorative lining for floors, walls, objects, and similar surfaces for ornamental and functional purposes, in addition to adding greater durability and protection to surfaces against weathering.

### PRIOR ART

Natural ornamental stones are largely used in civil construction due to their long durability characteristics, high resistance capability, and even so they yield high levels of brightness when submitted to a surface polishing process. However, given that these stones can be used under rather specific conditions as compared to the conditions under which they were formed, as it is exposed to weathering, this once rigid material can become friable. The outcome is a change in behavior mainly due weathering effects leading to imperfections and/or pathologies. Furthermore, these stones are often heterogenic, with variations in texture and coloration. In addition to being non-renewable resources, they're largely exploited today. Therefore, sustainable artificial alternatives mean both substantial innovation in terms of new products made available to the market, with textures that resemble natural stones, and alternatives that favor the preservation of the environment.

Seeking to meet market demand for natural stones and the need for less expensive products, greater control of homogeneity of ornamental surfaces that resemble rocky materials and better compliance with environmental regulations, the present invention introduces an innovative alternative of artificial granite.

The development of artificial materials that are equivalent to natural stones allows for ensuring certain advantages, such as appropriate porosity that reduces water absorption and staining that are so common in the case of natural stones or low quality artificial products. On the other hand, the present invention features what we call *intelligent impermeability,* that is to say, the product doesn't allow for watertightness in percolation, including with respect to water under negative or positive pressure. On the contrary, it allows for a gradual passage of fluids, thereby avoiding bulging, displacement, and degradation of the product or the brickwork.

These characteristics are made possible by the use of polymeric resin as a bonding agent due to its percolation between grain pores, thereby eliminating a substantial part of the porosity.

According to the current state of the art for the production of ornamental linings for both floors and walls used in civil construction, some known processes are used to simulate the appearance of high-end natural stones, such as granite and marble. With such processes it's possible to obtain additional elements for the simulation of feldspar which is an important rock of the mineral families. Nevertheless, there's no composition that is similar to the one introduced by the present invention which, in addition to ornamental features, also bestows a protective function that can't be perceived, in the same manner herein claimed by the present invention, in the options currently made available to the market by the state of the art.

For example, the document BR 10 2017 003184 provides for the option of synthetic granite or marble that can be used in the manufacturing of floors, front walls, dividers, counters or sinks. Nevertheless, as opposed to the present invention, the process through which such a synthetic material is obtained takes place under normal temperature and pressure with the cure being attained under room temperature or by forced oven cure. Accordingly, not only this process but also its parameters and results are beyond compare in relation to the results that can be obtained with the present invention.

Complementally, the document BR 10 2016 023463 describes the synthesis of artificial stone used for lining made of precipitate matter trapped by electrostatic precipitators of the steel industry together with epoxy resin. The use of such residues not only makes the composition divergent but it also makes the property of the obtained materials substantially distinct.

There are also other documents such as BR 11 2012 031114 which comprises linings called wall liners. In this document, a colored cementing agent used for stones comprises at least 100 parts in weight of polyester unsaturated resin for open air drying, o to 5 parts of hydrogenated castor oil, 1 to 20 parts in weight of nano powder, 10 to 250 parts in weight of a filling agent, and 1 to 15 parts in weight of an anti-shrinkage agent. The aforementioned colored cementing agent for stones can be used to fill in the gaps between construction materials, such as stones, tiles, and similar materials. Therefore, in contrast with the present invention that is applicable, to a great extent, to specific surfaces, the above-cited cementing agent is preferentially used for gap filling. Hence, the present development specifically addresses a granite simulating lining or application.

Moreover, both the document BR 10 2014 026830 and another one herein referred to address the use of residues. The document of interest shows a calcium silicate material produced from a ceramic paste essentially comprising marble residue and red ceramic grog. In which case, therefore, making it and the other documents completely different from the present invention.

It's also worth noting that the state of the art related to document PI 1002264-3 comprises a type of lining based on a resin and glitter polymer composite that is impermeable to water and other aggressive agents, such as acids and surfactants. Hence, the aforementioned application and formulation is in striking contrast with the formulation adopted in the present invention.

Finally, we should also mention document PI 0903086-7 that, like the other two we've already mentioned, uses residues in the composition of the material. However, in the case of main raw material it uses mollusk shells and clams in general, at three different grain sizes with distinct concentrations plus a bonding agent that is used as a catalyst to speed up the reaction. Hence, these are divergent compositions whose resulting appearance and functional properties are distinct in relation to the ones obtained by means of the present invention.

It's important to point out that no integral association of components has been identified in the state of the art as laid out in the present invention. And even more particularly, as far as similar compositions and products are concerned, no alkalizers were explicitly used together with shorteners. Therefore, along with the particulars of percentages and components of the composition that resulted in a unique product, process, application method, and use, the state of the art clearly doesn't provide for the present and innovative technological development.

Additionally, there are aspects of the invention's manufacturing process that are unique and crucial for the resulting technical effects. As we will explain further on, the order in which the elements are added to the mix, followed by a precise observation of the phases transition points in order to move on to the process stages, bestows innovation and substantial advancements to the state of the art.

Finally, the present invention made an important advancement in the state of the art by obtaining a product with lower levels of crumbling after friction, the kind of advantages that are not mentioned by any of the state of the art documents. These results are obtained by adding ultra violet ray (UV) protectors and anti-oxidizing agents to the composition, which is associated to all components and to the manner in which they are mixed. Even as it happens with the central characteristics of the invention, this aspect finds no equivalent in the state of the art.

In addition to descriptions made in patent documents, as far as the state of the art is concerned, it's known that ground grains of granite and other natural stones with particle sizes between roughly 3 to 8 mm are mixed with translucent resins and, upon being dried off or applied, they yield a colored pattern lining material that resembles the color of natural stone. This colored pattern lining material is mainly finished with a coating using a putty knife or else by means of pulverization or coating applied with a putty knife. It's also known that this colored pattern lining material may also have two or three separate colors in each component of the material that are handled in such a way that, after being dried off or stabilized, they resemble the color of a natural granite component. In this process, the purpose is to create a granite colored pattern by applying three to four coats of a multiple-component coating material for wall lining, in a colored pattern, based on a special procedure as follows: first, pulverization of a natural stone base color over the whole surface; a second pulverization of one or two more colors before the aforementioned first color is completely dried; a third pulverization (return) of a base color before the aforementioned one or two colors are completely dried.

In these processes, however - commonly used in the industry and in corresponding services -, if the color of the natural stone ground grain is similar to the granite component, it's possible to obtain a pattern that is similar to the natural granite color. Nonetheless, once these natural stone ground grains are used as a material for the colored pattern, all forms of the colored pattern are independently rounded and roughly in the format of grains. Lining hard aggregates is difficult and, as a result, the final product shows an irregular form and a randomized size of the natural granite component's colored pattern, in addition to a pattern in which the colored patterns are mixed up.

Furthermore, the lining material, made up of heavy aggregates and resins of this type, must have not only excellent ductility to make it easy to be applied using a putty knife but also enough viscosity to block aggregates from falling off. So, the width of a coat is limited to about 8 mm and, as a result, the size of aggregates is equally limited to about 8 mm.

That being the case, one can't expect to have a finish that closely resembles natural granite as the colored pattern of components is greater in size than the aforementioned dimension. There are cases in which aggregates measuring approximately 5 mm, in terms of lining by pulverization, aggregates with a larger size than the one cited fall off when the lining material is pulverized resulting in an excessively rough surface of the film.

In addition to these issues, three to four coats of the products available in the market for the state of the art are necessary, making these stages extremely complex. Because of that, it's not possible to obtain a uniformly finished pattern without any irregularities.

There are other processes used to create a colored pattern that resembles granite in which colored viscous grains in suspension (multicolored paints) are used mainly for finishing indoor walls to create a splash of colored grain pattern. The disadvantage of this application approach has to do with the complexity involving its execution as an additional phase is required for the dispersion of fine pieces, which is an extremely inappropriate and cost ineffective process mainly when used for outdoor applications and on walls.

Regarding the materials themselves, there are manufactured products that seek to simulate the appearance of high-end natural stones of which Formica^{®} and Silestone^{®} are good examples, but in most cases they're heavy, difficult to handle, or have a standard design printed on the surface. Although being widely used, Silestone^{®} is heavy and has a specific design pattern, in addition to being more expensive than the natural stone itself. Other fake granite stones can be found as porcelains and porcelain tiles that also have a specific pattern.

In this respect, the present patent application introduces an innovative process through which it's possible to obtain a product that perfectly resembles the natural appearance of high-end natural stones used as ornamental linings for floors and walls in the civil construction sector. It's a paste or textured product with which one can artificially mimic granite, marble and other high-end natural stones to perfection by just adding specially developed flakes.

The product is used as lining for both indoor and outdoor floors and can also be used to decorate other objects, such as plant pots, wood, or any other material used for ornamental purposes. It further stands out for being light, easy to apply, cost-effective in relation to natural stones, and easy to handle, in addition to featuring an intelligent impermeability, being resistant to yellowing, and reduced crumbling under friction.

The product obtained by the present invention is equivalent to natural granite and shows the common flakes that characterize the stains in such stones. Given that the application method was simplified due to its groundbreaking composition, any profession can apply it and ensure high quality standard and similarity with the equivalent natural stone. Additionally, it's cost is significantly lower than the cost of natural stone.

### SUMMARY

This invention comprises an artificial granite-type product that simulates a high-end natural stone when used for lining surfaces, the process for obtaining said product, the application method, and use.

Taking into account possible variations of quantities without significantly compromising the obtained results, it's important to point out that the percentage quantities of each component can vary and, because of that, the following percentages are adopted in the embodiment of the present invention: 7.1% a 21.3% of water, 2.4% to 7.2% of ethylene glycol, 0.1% to 0.3% of stabilizers, 0.5% to 1.5% of shorteners, 7.5% to 22.5% of resins, 0.5% to 1.5 of binders, 0.05% to 0.15% of alkalinizers, 0.1% to 0.3% of microbicides, 0.1% to 0.3% of fungicides, 26.5% to 79.5% of mineral loads and/or dolomites, 5% to 15% of flakes, 0.1% to 0.3% ultraviolet rays protector (UV), and 0.05% to 0.15% of antioxidant.

Some of the differentiating elements of the present invention are as follows:: (i) the steps, quantities, methods and the order in which the formulation elements are added to obtain the final product; (ii) the method for applying the obtained product on specific surfaces; and (iii) the final product itself and its use on ornamental and functional linings of floors, walls, and similar surfaces for the protection of target surfaces against weathering.

It should be noticed that the final mix in the resulting product may show different coloration depending on the color of flakes and minerals and/or added dolomites, which can be previously tinted to get the desired coloration.

The component of resins must be previously prepared to start the process of getting the product of the present invention in such a way as to produce a film at low temperatures to allow for the product to be applied on any place and under extreme temperature variations, with the final mix being homogenized in a mechanical mixer.

Even though the percentages of the formulation are excellent in relation to the final results, it's important to point out that these values can be altered depending on the suppliers of the respective raw material. In some cases, adjustments may cause up to 50% variation in the aforementioned values. Moreover, the flake component may vary by function of the effect, type, and appearance of the high-end natural stone meant to be mimicked, as well as the desired size and color.

### DETAILED DESCRIPTION OF THE INVENTION

Currently, the lining has a complete and preferred formulation as follows: water (14.22%), ethylene glycol (4.78%), stabilizers (0.20%), shorteners (1.00%), resins (15.00%), binders (1.00%), alkalinizers (0.10%), microbicides (0.20%), fungicides (0.20%), mineral loads/ dolomites (53.00%), flakes (10.00%), UV protector (0.20%), antioxidant (0.1%). As can be noticed, there are few elements in common with the ones described in the state of the art patent documents but, even so and additionally, quantities diverge substantially. Also known as sands, the mineral loads or dolomites used in the formulation vary in particle size between 325 to 10 mesh, that is to say, significantly finer that those often used in systems and processes of such nature. As far as the state of the art is concerned, it's known that particle sizes thicker than up to 8 mm are used.

Complementally, as pointed out before, the specific and particular composition allowed for an unexpected and ground breaking technical result that can be translated, among other elements, into the following advantages: decreased yellowing and crumbling under friction.

In what concerns the decreased yellowing, no equivalent approach has been identified in the state of the art. Besides the composition itself, this innovation was made possible by using a Brazilian resin. The properties of the acrylic-based resins used in the invention are potentiated by the addition of functional copolymers.

Furthermore, regarding the composition as a whole, the differentiating elements UV protector and antioxidant significantly contribute to the aspect of yellowing reduction. For example, the antioxidant avoids prevents some essential elements of the composition from oxidizing.

In what concerns the decreased after-friction crumbling, the use of the new resin, along with the addition of functional copolymers, is crucial as it substantially increases the resistance to friction. In this case, the type of resin and the relative quantity in relation to the additives and components of the formulation played a key role in obtaining such an extremely high quality of the product's film.

It should be pointed out that a 100% acrylic resin is used in the present invention and, therefore, no styrenated resin is used, which hampers the results of both process and product. However, it's important to highlight that there are a number of acrylic resins available, each with its own differentiated performance. For example, as mentioned before, the copolymers used as functional agents in the 100% acrylic resin of the present invention favor a differentiated performance of the product.

In addition to the aspects related to yellowing and decreased after-friction crumbling in the obtained product, the process related to the present invention boasts innovative characteristics. The number of steps was significantly reduced as opposed to the processes of the state of the art and the aeration of the product was also reduced, thereby making it possible to have a more homogeneous mix. Additionally, it's of paramount importance to note the order in which the materials are added over the course of the process itself. This order favors the optimization of time, making it possible to ensure consistency and unique aspects in the product that are particularly desired by the market.

In such a context, the new process that was developed comprises the following: addition of stabilizer and ethylene glycol up to total dissolution; addition of shortener up to the formation of gel; as well as other additions as per the set time with no observation of changing points. Thus, the order in which the elements of the formulation are added is as follows: water, stabilizers, shorteners, resins, alkalinizers, microbicides, fungicides, dolomites mineral loads, flakes, UV protector, and antioxidant.

It's important to point out that the order in which the elements are added is not addressed by any of the documents of the state of the art and thereby is a key differentiating element in the present invention. Nor is the observation of moments at which specific consistency of the mix is attained addressed by said documents, in which case without the observation of such parameters, the product ends up being excessively aerated. The development of the present invention filled the gap of such a lack of standard in that it sets up a process order and the consistency parameters to be observed in order to obtain a differentiated product.

Complementally, the state of the art addresses the application method of similar products, comprising four steps: application of an undercoat (two primer coats); application of the resined product; sanding; and application of the topcoat (varnish). Given the development and improvement of the steps and components, the process of the present invention doesn't require the two last steps, namely, sanding and application of varnish. Therefore, for the application of this artificial granite-type product as developed and presented by the present invention descriptive report, it's enough to apply two coats of primer followed by the subsequent application of the product itself, in which case there's no need for a topcoat or for sanding.

In this particular, there's substantial advancement and innovation in obtaining the product, involving the aforementioned specific order and quantities; also in the application phase given that the method requires preparation and/or specific phases that are optimized by means of the new procedure.

Hence, after the product is obtained there remains the preparation step of the obtained product to allow for its application on surfaces. In the first step, the procedure involved in adding the components and observing the aforementioned consistency shall be observed. As already been laid out, the second step involves the application of the obtained product on a surface with the current process comprising only the application of an undercoat and the obtained product. In the second phase, there's no need for sanding and varnish application, thereby generating savings and allowing for a versatile use.

Furthermore, the flake manufacturing process, which is one of the elements used in the first step, has been improved in relation to existing processes. The flake is applied using a sprayer and fans for subsequent drying. Then it's removed and subjected to grinding in a custom-made equipment and then it's subsequently sieved in a revolving screen in order to obtain the desired sized flakes. Then, at the end of this subprocess, the flake is added to the production line right after the mineral load is added following the aforementioned adding order.

In view of all the new process and the developed product, it's important to point out that the obtained product shows improved characteristics of a higher quality film as it doesn't crumble and is highly resistant to weathering mainly when exposed to rain and sunlight. Moreover, in addition to making for an easy and fast production with operational controls, the developed process allows for a versatile application of the final product.

## Claims

1. ARTIFICIAL GRANITE-TYPE PRODUCT that simulates a high-end natural stone for surface lining, **characterized by** comprising in its composition water, ethylene glycol, stabilizers, shorteners, resins, binders, alkalinizers, microbicides, fungicides, mineral loads and/or dolomites, flakes, ultraviolet ray protector (UV), and antioxidant, with said composition comprising 7.1% to 21.3% of water, 2.4% to 7.2% of ethylene glycol, 0.1% to 0.3% of stabilizers, 0.5% to 1.5% of shorteners, 7.5% to 22.5% of resins, 0.5% to 1.5 of binders, 0.05% to 0.15% of alkalinizers, 0.1% to 0.3% of microbicides, 0.1% to 0.3% of fungicides, 26.5% to 79.5% of mineral loads and/or dolomites, 5% to 15% of flakes, 0.1% to 0.3% ultraviolet rays protector (UV), and 0.05% to 0,15% of antioxidant.

2. ARTIFICIAL GRANITE-TYPE PRODUCT that simulates a high-end natural stone for surface lining as per claim 1, **characterized by** the use of mineral loads and/or dolomites with particle size of 325 to 10 mesh.

3. ARTIFICIAL GRANITE-TYPE PRODUCT that simulates a high-end natural stone for surface lining as per claim 1, **characterized by** the use of acrylic-based resins to which functional copolymers are added in its composition.

4. PROCESS FOR OBTAINING AN ARTIFICIAL GRANITE-TYPE PRODUCT that simulates a high-end natural stone used for surface lining, **characterized by** comprising the following steps:
a) addition of stabilizers and ethylene glycol to water up to total dissolution;
b) addition of shorteners up to the formation of gel;
c) addition of alkalinizers together with resins up to the formation of a pudding;
d) addition of alkalizing components;
e) addition of microbicides;
f) addition of fungicides;
g) addition of mineral loads and/or dolomites;
h) addition of flakes;
i) addition of ultraviolet rays (UV) protector; and
j) addition of antioxidant;
with all these steps being carried out in a sequential manner, a, b, c, d, e, f, g, h, i, and j.

5. PROCESS FOR OBTAINING AN ARTIFICIAL GRANITE-TYPE PRODUCT that simulates a high-end natural stone used for surface lining as per previous claims, **characterized by** the use of flakes in step (h) that are sprayed over a plastic material and subsequently dried off using fans, then submitted to grinding in custom-made equipment and, lastly, by being sieved on a revolving screen.

6. PROCESS FOR OBTAINING AN ARTIFICIAL GRANITE-TYPE PRODUCT as per previous claims, **characterized by** the following percentages of components added over the course of each step: 7.1% a 21.3% of water, 2.4% to 7.2% of ethylene glycol, 0.1% to 0.3% of stabilizers, 0.5% to 1.5% of shorteners, 7.5% to 22.5% of resins, 0.5% to 1.5 of binders, 0.05% to 0.15% of alkalinizers, 0.1% to 0.3% of microbicides, 0.1% to 0.3% of fungicides, 26.5% to 79.5% of mineral loads and/or dolomites, 5% to 15% of flakes, 0.1% to 0.3% ultraviolet rays protector (UV), and 0.05% to 0.15% of antioxidant.

7. APPLICATION METHOD OF AN ARTIFICIAL GRANITE-TYPE PRODUCT as per previous claims, **characterized by** comprising the steps of two primer undercoats application and subsequent application of the artificial granite-type product on the surface.

8. USE OF AN ARTIFICIAL GRANITE-TYPE PRODUCT obtained by any of the aforementioned claims, as ornamental and functional lining for floors, walls, both outdoor and indoor environments, general use objects and related surfaces and further for simulating natural granite.
